# EUROPEAN PATENT SPECIFICATION

(11) **EP 1 552 210 B1**
(45) Date of publication and mention of the grant of the patent: **16.08.2006**
(21) Application number: 03761869.1
(22) Date of filing: 19.06.2003
(51) Int. Cl.: F16L 55/128

(54) **ARRANGEMENT AT A HYDRAULIC CYLINDER ON A MANOEUVRABLE PLUG FOR PLUGGING OF PIPES**
ANORDNUNG AN EINEM HYDRAULIKZYLINDER AN EINEM MANÖVRIERBAREN STOPFEN ZUM ABSPERREN VON ROHREN
DISPOSITIF POUR VERIN HYDRAULIQUE MONTE SUR UN BOUCHON MANOEUVRABLE DESTINE A BOUCHER UN TUYAU

(30) Priority: 26.06.2002 NO 20023100
(43) Date of publication of application: 13.07.2005
(73) Proprietor: Plugging Specialists International AS, 4033 Stavanger (NO)
(72) Inventor: SYSE, Harald, N-4052 Royneberg (NO)
(74) Representative: Briddes, Sam
(86) International application number: PCT/NO2003/000203
(87) International publication number: WO 2004/003421

(56) References cited:
- US-A- 4 465 104
- US-A- 5 029 614

## Description

This invention regards an arrangement at a hydraulic cylinder on a manoeuvrable plug for plugging of pipes, specified more particularly as a through cylinder rod projecting through both ends of the plug.

When maintaining and possibly developing pipelines, e.g. for transport of petroleum products, it is necessary to be able to shut down longer or shorter sections of a piping system.

In its simplest form, prior art comprises fixed valves that are closed and opened on demand.

Such valves constitute a significant increase in costs when constructing the piping system. To some extent it is difficult to predict where to position the valves in order to allow the piping system to be shut down in the correct place. Consequently there is a risk that the use of valves will be excessive, or that the valves will be positioned in the wrong place. Excessive use of valves results in unnecessary capital costs, and the wrong placement leads to complications and additional work in connection with shut down of the piping system.

A valve that is left unused for a long period will also carry a risk of malfunction when it is put to use.

A valve represents a throttling of the piping system. This results in pressure loss, wear on the pipe due to cavitation etc., and problems connected with inspection equipment passing through valve openings.

Valves have to a large extent been replaced by plugs that are positioned and locked in the piping system by use of various means. A plug is normally propelled through the pipe by the medium that normally flows in the piping system, or it runs itself through being equipped with wheels and a driving mechanism.

In its simplest operating form a plug is operated by use of a direct connection between the plug and the control system. Cables, wires and hoses are pulled along into the piping system, so as to allow the plug to be locked upon reaching the correct position.

Generally, there is a risk involved in pulling such transmission systems into the piping system. Damage to a cable or similar may cause the placement of a plug to fail, or the subsequent removal of the plug will be extra demanding.

Remotely operated plugs with wireless signal transmission have eliminated the main problem associated with the directly operated type of plug. A wireless-operated plug carries with it all power sources for operation of internal cylinders, valves, radio systems etc. by containing batteries, hydraulic oil, propellant gases and similar. By arranging an antenna on the outside of the pipe in which the plug is to be fixed, the control signals are transmitted from the control system to the plug. Examples at this is discussed in GB 2 235 745, US 4,465,104 and US 4,854,384.

A plug is typically constructed with one or more sections. In a main section, which is to form the seal in the pipe, a number of concentric components are assembled. An end plate combined with a peripheral gasket constitutes the actual sealing element. Peripherally positioned slips fasten the plug against the pipe walls when the slips are forced outwards by an axially positioned hydraulic cylinder and cooperating, sloping slide and pressure faces. The piston rod of the cylinder is coupled to one end plate of the plug. In the plug there are devices that among other things operate the hydraulic cylinder.

Connected to the main section there may be several control sections containing recording and operating equipment for positioning etc. Several main sections may also be interconnected in order to achieve the desired effect. Interconnection is achieved by coupling articulated stays to the centre of the end face of a section.

When operating the cylinder to set or release a plug, the cylinder will pull the end faces of the plug together or push them out in the longitudinal direction of the plug. This means that when setting or releasing a plug, the cylinders of the main sections must be operated in a particular sequence so as to ensure that the plug end which the cylinders wants to move, is not locked by the following main section. This places limitations on the use of the plug. Alternatively, intermediate stays must be telescopic; however this complicates the construction and makes the plug more expensive.

It is desirable and often necessary to transmit information between the different sections of the plug. Preferably, this takes place via cables for transmission of electrical signals and liquid-carrying pipes/hoses for pressure recording or sampling.

With the present design of the main section of the plug, where the end plates of the plug section move in relation to each other, complicated leadthroughs must be constructed for signal-carrying elements in components that move with respect to each other. The signal-carrying elements must to a certain extent also be run along paths through the plug section which are complicated, require a lot of space and increase costs.

With the present design, the hydraulic cylinder of the plug comprises a piston with a single piston rod. In this design the oil volume of the cylinder and the compression faces of the piston will be imbalanced. This is because the piston rod takes up cylinder volume and piston area on one side of the piston only.

When the piston is pushed fully into the cylinder, the volume of the piston rod causes a surplus of oil that must be stored in a reservoir. This requires a lot of space and is not desirable.

A cylinder piston with an unequal area will also exert a pressure force on the piston rod that is greater than the tractive force. This may result in a requirement for pressure control systems, so as to balance the pressure and tractive forces of the cylinder.

The object of the invention is to remedy the disadvantages of prior art.

The object is achieved in accordance with the invention by the characteristics given in the description below and in the appended claims.

The main section of a plug comprises an axially positioned cylinder with a through piston rod. One end of the piston rod is integrated into one end plate of the plug section. The other end of the piston rod is led through the bottom of the cylinder, which is integrated into the second end plate of the plug section. The leadthrough of the piston rod includes the necessary sealing elements.

At both ends of the piston rod there is a connecting element for connection of other plug sections via articulated stays.

With a connection between the sections of the plug arranged in this manner, the distance between the two connecting points of a plug section is not affected by the position of the cylinder. Therefore, a plug may be set and released through an arbitrary cylinder operating sequence.

The through piston rod comprises axial bores for cables and hoses/pipes, and it may comprise axial bores for stagnant or flowing liquid and gas. The leadthroughs comprise appropriate sealing means.

The following describes a non-limiting example of a preferred embodiment illustrated in the accompanying drawings, in which:

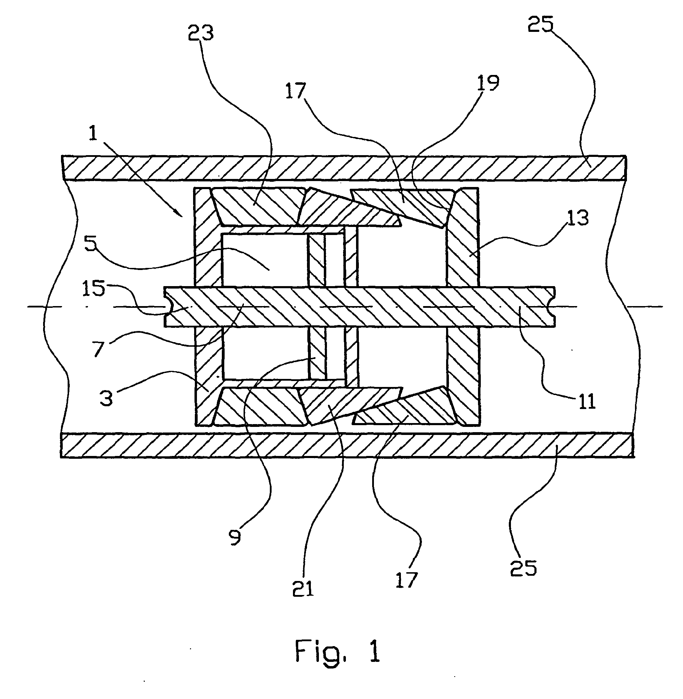

Figure 1 shows a section through the main section of a plug; and

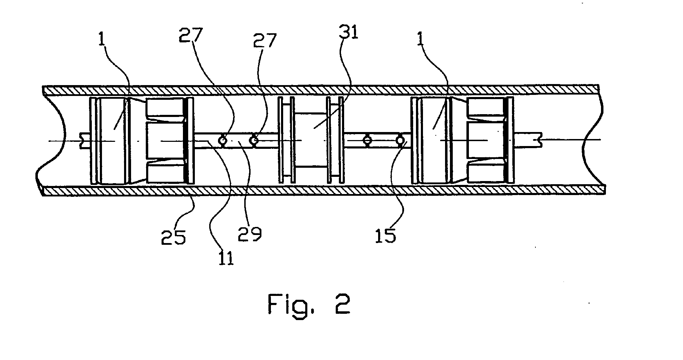

Figure 2 shows assembly of a complete plug comprising two main sections and a following control section.

In the drawings, reference number 1 denotes a main section equipped with a first end plate 3, where a hydraulic cylinder 5 has been integrated. The hydraulic cylinder 5 comprises a piston 7 and a through piston rod 9. The first end portion 11 of the piston rod 9 is connected to the second end plate 13 of the plug. The second end portion 15 of the piston rod is led out through the first end plate 3. For operation of the hydraulic cylinder 5 there is provided a hydraulic pump (not shown) and also valves (not shown). Several slips 17 are disposed along the periphery of the plug, the ends of which slips abut the sloping pressure face 19 of the second end plate 13. The slips 17 are arranged on a conical force ring 21. A gasket 23 is disposed peripherally between the conical force ring 21 and first end plate 3. The plug is enclosed by a pipe wall 25.

Several main sections 1 may be interconnected through the provision of ball joints 27 at the end portions 11, 15 of the piston rod. The main sections 1 are interconnected by means of ball joints 27 and stay 29, possibly via one or more control sections 31.

A plug is used to seal off liquid- or gas-carrying pipes by the plug being inserted into the pipe and propelled by the liquid or gas pressure. It may also be propelled by a built-in driving mechanism and associated wheels for rolling on. A complete plug is assembled from one or more main sections 1 that perform the sealing function, and optionally one or more control sections 31 containing control and operating systems (not shown).

The connection between the sections 1, 31 comprises stay 29 and ball joints 27. The ball joints 27 are designed to accommodate the necessary movements when a plug is passed through bends in a pipe.

A main section 1 is fixed against a pipe wall 25 by a hydraulic cylinder 5 being retracted. The end plates 3, 13 connected to the cylinder 5 are drawn together, and slips 17 arranged on the periphery of the main section 1 are pressed out against the pipe wall 25 through being pushed in over a conical force ring 21. During the fixing sequence a gasket 23 is also compressed and forced outwards, so as to completely seal the pipe together with the first end plate 3.

By interconnecting the various sections 1, 31 of the plug by means of stay 29 and ball joints 27 via the ends 11, 15 of the piston rod, the movement in the cylinder 5 during setting and release of the plug does not propagate to the connection between the sections 1, 31. This makes it possible to operate the main sections 1 in an arbitrary order when setting and releasing the plug.

Preferably, the piston rod 9 is equipped with one or more leadthroughs (not shown) for signal cables, hoses and pipes (not shown), as well as bores (not shown) for stagnant or flowing liquid and gas. The leadthroughs are equipped with the required seals in appropriate places in order to withstand the pressure differences that arise.

## Claims

1. An arrangement at a plug for sealing of liquid- or gas-carrying pipes, comprising a main section (1) having one or more axially arranged hydraulic cylinders (5), fastening devices (13, 17, 21) and sealing surfaces (3, 23), **characterized in that** the piston rod (9) of the hydraulic cylinder (5) is through-going and integrated through the plug's both end plates (3, 13), and that the ends (11, 15) of the piston rod are provided with a connecting element (27).

2. An arrangement in accordance with claim 1,
**characterized in that** predominantly axial bores for the passage of cables, liquid and gas are provided in the piston rod (9).

3. A method of fastening a plug for sealing of liquid- or gas-carrying pipes, comprising at least two interconnected main sections (1) having one or more axially positioned hydraulic cylinders (5), the piston rod (9) of the hydraulic cylinder (5) is through-going and integrated through the main section's (1) both end plates (3,13), fastening devices (13, 17, 21) and sealing surfaces (3, 23),
**characterized in that** any one of the main sections (1) is fastened first by the hydraulic cylinder (5) moving the second end plate (13) of one of the main sections (1), so that the second end plate forces slips (17) out over a conical force ring (21) until the slips (17) are forced against the pipe wall (25) and the main section is locked in the pipe, and by the first end plate (3) simultaneously being moved towards a gasket (23), so that the gasket (23) and the first end plate (3) seal the pipe, and that any of the non-fastened main sections (1) is then fastened in the same manner, wherein the sequence of fastening of the main sections (1) is arbitrary.

## Patentansprüche

1. Anordnung an einem Verschluss zur Abdichtung von Flüssigkeit- oder Gas-führenden Rohren, umfassend einen Hauptabschnitt (1), der einen oder mehrere axial angeordnete hydraulische Zylinder (5) aufweist, Befestigungsvorrichtungen (13, 17, 21) und Dichtungsoberflächen (3, 23), **dadurch gekennzeichnet, dass** die Kolbenstange (9) des hydraulischen Zylinders (5) durchgängig ist und durch die beiden Endplatten (3, 13) des Verschlusses hindurch eingebaut ist, und dass die Enden (11, 15) der Kolbenstange mit einem Verbindungselement (27) versehen sind.

2. Anordnung nach Anspruch 1, **dadurch gekennzeichnet, dass** überwiegend axiale Bohrungen zur Durchführung von Kabeln, Flüssigkeit und Gas in der Kolbenstange (9) vorgesehen sind.

3. Verfahren zur Befestigung eines Verschlusses zur Abdichtung von Flüssigkeiten- oder Gas-führenden Rohren, umfassend mindestens zwei gekoppelte
Hauptabschnitte (1), die einen oder mehrere axial angeordnete hydraulische Zylinder (5) aufweisen, wobei die Kolbenstange (9) des hydraulischen Zylinders (5) durchgängig ist und durch die beiden Endplatten (3, 13) des Hauptabschnitts (1), die
Befestigungsvorrichtungen (13, 17, 21) und die Dichtungsoberflächen (3, 23) hindurch eingebaut ist, **dadurch gekennzeichnet, dass** jeder der Hauptabschnitte (1) zuerst befestigt wird durch den hydraulischen Zylinder (5) durch Bewegen der zweiten Endplatte (13) einer der Hauptabschnitte (1), so dass die zweite Endplatte (1) Gleiter (17) nach außen über einen konischen Druckring (21) drückt bis die
Gleiter (17) gegen die Rohrwand (25) gedrückt werden und der Hauptabschnitt in dem Rohr arretiert ist, und durch die erste Endplatte (3), die gleichzeitig in Richtung eines Dichtrings (23) bewegt wird, so dass der Dichtring (23) und die erste Endplatte (3) das Rohr abdichten, und dass jeder der nicht befestigten Hauptabschnitte (1) danach in derselben Weise befestigt wird, wobei die Reihenfolge der Befestigung der Hauptabschnitte (1) frei wählbar ist.

## Revendications

1. Dispositif sur un bouchon pour fermer de façon étanche des tuyaux transportant du liquide ou du gaz, comprenant une section principale (1) présentant un ou plusieurs vérin(s) hydraulique(s) (5) agencé(s) dans le sens axial,
des dispositifs de fixation (13, 17, 21) et des surfaces de fermeture étanche (3, 23), **caractérisé en ce que** la tige de piston (9) du vérin hydraulique (5) est continue et intégrée à travers les deux plaques d'extrémité (3, 13) du bouchon, et **en ce que** les extrémités (11, 15) de la tige de piston sont pourvues d'un élément de raccordement (27).

2. Dispositif selon la revendication 1,
**caractérisé en ce que** des alésages axiaux pour le passage de câbles, de liquide et de gaz sont prévus principalement dans la tige de piston (9).

3. Procédé de fixation d'un bouchon de fermeture étanche de tuyaux portant du liquide ou du gaz, comprenant au moins deux sections principales (1) interconnectées présentant un ou plusieurs vérin(s) hydraulique(s) (5) positionné(s) dans le sens axial, la tige de piston (9) du vérin hydraulique (5) est continue et intégrée à travers les deux plaques d'extrémité (3, 13) de la section principale (1), des dispositifs de fixation (13, 17, 21) et des surfaces de fermeture étanche (3, 23),
**caractérisé en ce que** l'une quelconque des sections principales (1) est fixée tout d'abord par le vérin hydraulique (5) déplaçant la seconde plaque d'extrémité (13) d'une des sections principales (1), de sorte que la seconde plaque d'extrémité pousse des glissements (17) vers l'extérieur sur un anneau de force conique (21) jusqu'à ce que les glissements (17) soient poussés contre la paroi de tuyau (25) et la section principale est verrouillée dans le tuyau, et **en ce que** la première plaque d'extrémité (3) simultanément déplacée en direction d'un joint statique (23), de sorte que le joint statique (23) et la première plaque d'extrémité (3) ferment le tuyau de façon étanche, et **en ce qu'**une quelconque des sections principales (1) non fixées est ensuite fixée de la même manière, dans lequel la séquence de fixation des sections principales (1) est arbitraire.
